# EUROPÄISCHE PATENTSCHRIFT

(11) **EP 2 398 685 B1**
(45) Veröffentlichungstag und Bekanntmachung des Hinweises auf die Patenterteilung: **02.04.2014**
(21) Anmeldenummer: 10704818.3
(22) Anmeldetag: 17.02.2010
(51) Int. Cl.: B61D 19/00, B61D 27/00, B60H 1/22

(54) **VERFAHREN ZUM BEHEIZEN EINES INNENRAUMS EINES SCHIENENFAHRZEUGS**
METHOD FOR HEATING AN INTERIOR OF A RAILWAY VEHICLE
PROCÉDÉ DE CHAUFFAGE D'UN HABITABLE D'UN VÉHICULE FERROVIAIRE

(30) Priorität: 17.02.2009 WO PCT/EP2009/051853
(43) Veröffentlichungstag der Anmeldung: 28.12.2011
(73) Patentinhaber: Bombardier Transportation GmbH, 10785 Berlin (DE)
(72) Erfinder: MINGES, Florian, 57072 Siegen (DE); BRUDEL, Oliver, 14612 Falkensee (DE)
(74) Vertreter: Cohausz & Florack
(86) Internationale Anmeldenummer: PCT/EP2010/052002
(87) Internationale Veröffentlichungsnummer: WO 2010/094717

(56) Entgegenhaltungen:
- DE-C- 694 090
- US-A- 1 951 521
- US-A- 2 044 733
- US-A- 3 426 177
- FERREIRE M ET AL: "FLACHENHEIZUNGEN IN SCHEINENFAHRZEUGEN PANEL HEATING SYSTEMS IN RAIL VERHICLES CHAUFFAGES DE SURFACE POUR VEHICULES FERROVIARES" ZEITSCHRIFT FUR EISENBAHNWESEN UND VERKEHRSTECHNIK. DIE EISENBAHNTECHNIK + GLASERS ANNALEN, GEORG SIEMENS VERLAGSBUCHHANDLUNG. BERLIN, DE, Bd. 124, Nr. 11, 1. November 2000 (2000-11-01), Seiten 577-580, XP000968766 ISSN: 0941-0589

## Beschreibung

Die vorliegende Erfindung betrifft ein Verfahren zum Beheizen eines Innenraums eines Schienenfahrzeugs. Ferner betrifft die Erfindung ein entsprechendes Schienenfahrzeug mit einer Einrichtung zur Durchführung eines solchen Verfahrens.

Um dem Problem entgegenzuwirken, wurden verschiedene Normen eingeführt, welche die zulässigen Temperaturen, insbesondere Oberflächentemperaturen, Temperaturabweichungen und Wärmedurchgangskoeffizienten in bestimmten Bereichen von Schienenfahrzeugen festlegen. So wird in der EN 13129 "Luftbehandlung in Schienenfahrzeugen des Fernverkehrs" und in der EN 14750 "Luftbehandlung in Schienenfahrzeugen des innerstädtischen regionalen Nahverkehrs" für den Einstiegsbereich ein Wärmedurchgangskoeffizient vorgeschrieben, der nur 1 W/m²K über dem des gesamten Fahrzeugs liegen darf.

Im Fernverkehrsbereich kann dieser Forderung durchaus nachgekommen werden, was unter anderem an den stark isolierten Türflügeln im Eingangsbereich der Fernverkehrszüge liegt. So besitzt zum Beispiel der ICE 3, ein Hochgeschwindigkeits-Eisenbahn-Elektrotriebwagenzug der neueren Generation, einen Wärmedurchgangskoeffizienten von 1,3 W/m²K und die Außentür einen Wärmedurchgangskoeffizienten von 2,1 W/m²K.

Probleme bestehen jedoch vor allem im Nahverkehrsbereich, da hier durch die Verwendung von Isolierfolien, Isolierverglasung und PU-Sandwichbauweisen allenfalls Wärmedurchgangskoeffizienten der Außentür von minimal 3,8 W/m²K erreichbar sind. Um die erwähnte Norm zu erfüllen, sind daher bei Schienenfahrzeugen des Nahverkehrsbereichs aufwendige und kostenintensive Zusatzmaßnahmen wie zum Beispiel eine separate Zusatzheizung im Einstiegsbereich erforderlich.

Für das Wohlbefinden der Passagiere ist aber weniger der Wärmedurchgangskoeffizient, sondern vielmehr die Oberflächentemperatur an der Innenseite des Türflügels entscheidend. Die Wärmeabstrahlung des menschlichen Körpers in Richtung des kühleren Türflügels führt zu einer örtlich verstärkten Auskühlung der Haut und wird als Zugluft empfunden. Die Oberflächentemperatur wird zwar durch die Isolierung des Türflügels bestimmt, kann aber durch die Verwendung von Zusatzheizgeräten im Einstiegsbereich beeinflusst werden. In der EN 14750 ist für die Oberflächentemperatur an Türflügeln eine maximale Abweichung von 15K im Vergleich zur mittleren Raumtemperatur zulässig. Bei einer Innentemperatur von 22°C darf die Oberflächentemperatur des Türflügels also minimal 7°C betragen.

Die Problematik hinsichtlich der Oberflächentemperatur an Türflügeln hat in der Vergangenheit bisher wenig Beachtung gefunden, da die erwähnte Norm EN 14750 erst im Jahre 2006 veröffentlicht wurde. Bis zu diesem Zeitpunkt war die Norm VDV 180 für den Nahverkehr maßgeblich. Hier wurden aber keine Anforderungen betreffend die Oberflächentemperatur an Türflügeln gestellt.

Um die maximal zulässige Abweichung von 15K zwischen der Oberflächentemperatur an der Türflügelinnenseite und der Raumtemperatur zu erreichen, werden wie erwähnt in der Regel Zusatzheizelemente im Einstiegsbereich vorgesehen, die zu einer aufwendigen Montage und relativ hohen Kosten führen. Eine Erhöhung der Isolationsstärke des Türflügels ist im Nahverkehrsbereich bisher nicht vorgesehen, da die Türflügel aufgrund ihrer Einsatzbedingungen in ihren Abmaßen weitestgehend festgelegt sind.

Es ist daher die Aufgabe der vorliegenden Erfindung, ein Verfahren und Schienenfahrzeug bereitzustellen, bei dem die Temperaturabweichung zwischen der Oberflächentemperatur des Bauteils und der mittleren Raumtemperatur auf ein Minimum reduziert ist.

Die zuvor hergeleitete und aufgezeigte Aufgabe wird gemäß einer ersten Lehre der vorliegenden Erfindung gelöst durch ein Verfahren zum Beheizen eines Innenraums eines Schienenfahrzeugs, nach Anspruch 1.

Das besagte Bauteil kann ein Türflügel einer Außentür oder ein Wandabschnitt sein, der insbesondere eine Fensterscheibe aufweist, wobei die Oberflächentemperatur entsprechend aur der Innenseite des Türflügels oder des Wandabschnitts von dem ersten Temperatursensor ermittelt wird. Insbesondere ist die Außentür Teil eines Einstiegsbereichs eines Vorraums des Schienenfahrzeugs. Handelt es sich bei dem Bauteil um einen Wandabschnitt, so ist es denkbar, dass der Wandabschnitt einen Teil der Außenwand des Fahrgastraums bildet.

Ein solches Heizelement hat den Vorteil, dass die Oberflächentemperatur des Bauteils, insbesondere Türflügels, erhöht wird und nicht allein von der Isolationsstärke des Bauteils, insbesondere Türflügels, beeinflusst wird. Durch die Möglichkeit der Erhöhung der Oberflächentemperatur kann die maximale Abweichung von 15K im Vergleich zur mittleren Raumtemperatur im Innern des Fahrzeugs deutlich eintacher eingehalten werden. Auch kann ein solches Heizelement, da es in das Bauteil bzw. den Türflügel integriert ist, besonders platzsparend angeordnet werden und zusätzlich zur Beheizung des Fahrzeugs verwendet werden.

Dabei bedeutet im erfindungsgemäßen Sinne der Ausdruck "integriertes Heizelement", dass das Heizelement sowohl im als auch am Bauteil, insbesondere Türflügel, angeordnet sein kann.

Gemäß einer Ausgestaltung des Verfahrens ist vorgesehen, dass die Raumtemperatur des Innenraums mit einem zweiten Temperatursensor ermittelt wird, wobei der ermittelte Temperaturwert für die Raumtemperatur an die Steuerung übertragen wird, wobei der ermittelte Temperaturwert für die Raumtemperatur mit einem Referenzwert für die Raumtemperatur und/oder mit dem Referenzwert für die Oberflächentemperatur und/oder mit dem ermittelten Temperaturwert für die Oberflächentemperatur verglichen wird und wobei auf Basis des Vergleichsergebnisses die Wärmeabgabe des in das Bauteil integrierten Heizelements geregelt wird. Dabei kann, wenn der ermittelte Temperaturwert für die Raumtemperatur und der ermittelte Temperaturwert für die Oberflächentemperatur herangezogen werden, ferner vorgesehen sein, dass die Differenz zwischen dem ermittelten Temperaturwert für die Raumtemperatur und dem ermittelten Temperaturwert für die Oberflächentemperatur ermittelt wird, wobei der ermittelte Differenzwert mit einem Referenzwert für Differenzwerte verglichen wird und wobei auf Basis des Vergleichsergebnisses die Wärmeabgabe des in das Bauteil integrierten Heizelements geregelt wird.

Dabei ist es denkbar, dass bei einer Differenz (Abweichung) zwischen dem ermittelten Temperaturwert für die Raumtemperatur und dem ermittelten Temperaturwert für die Oberflächentemperatur von mindestens 15K (Kelvin), bevorzugt von mindestens 10K, besonders bevorzugt von mindestens 5K, die Wärmeabgabe des in das Bauteil integrierten Heizelements geregelt, insbesondere erhöht, wird.

Die zuvor hergeleitete und aufgezeigte Aufgabe wird gemäß einer zweiten Lehre der vorliegenden Erfindung gelöst durch ein Schienenfahrzeug mit einer Einrichtung zur Durchführung des zuvor beschriebenen Verfahrens. Bei dem Schienenfahrzeug kann es sich bei dem Innenraum um einen Vorraum mit einem eine Außentür aufweisenden Einstiegsbereich oder um einen Fahrgastraum, der eine Außenwand aufweist, handeln.

Gemäß einer Ausgestaltung des erfindungsgemäßen Schienenfahrzeugs ist das Heizelement ein Flächenheizelement. Ein Flächenheizelement hat den Vorteil einer konstanten Verteilung der Wärme über das gesamte Bauteil, beispielsweise den gesamten Türflügel oder zumindest über die zu beheizenden Abschnitte des Türflügels. Bei Verwendung eines Flächenheizelements kann dieses außerdem als zusätzliche Isolierung dienen, wodurch die Isolationsstärke des Bauteils erhöht wird.

Wie zuvor angedeutet, kann das Heizelement im Innern des Bauteils, aber auch außen auf dem Bauteil aufgebracht sein. Die Anordnung im Innern des Bauteils hat den Vorteil, dass das Heizelement, insbesondere wenn es sich um ein relativ empfindliches, dünnes Flächenheizelement handelt, optimal geschützt ist.

Im Falle einer Anordnung des Heizelements im Innern des Bauteils ist dieses gemäß einer weiteren Ausgestaltung zwischen dem Kernmaterial einer innen liegenden Kernlage und einer außen liegenden Deckschicht angeordnet. So ist ein Wandaufbau bzw. Türflügelaufbau denkbar, bei dem in der Mitte eine Kernlage angeordnet ist, die eine Rahmenstruktur aufweist, wobei zwischen den einzelnen Rahmenteilen der Rahmenstruktur ein Kernmaterial eingesetzt ist. Zu beiden Seiten der Kernlage ist jeweils eine Deckschicht vorgesehen, die die jeweilige Außenseite des Bauteils, insbesondere Türflügels, bildet.

Das Heizelement, insbesondere das Flächenheizelement, kann dabei auf der zum Innern des Schienenfahrzeugs und/oder zum Vorraum oder Fahrgastraum weisenden Seite des Kernmaterials angeordnet sein. Das bedeutet, dass das Heizelement auf dem Kernmaterial und vorzugsweise zwischen den Rahmenteilen der Kernlage angeordnet sein kann. In diesem Fall befindet sich das Heizelement also im Innern der Kernlage und schließt vorzugsweise mit der Rahmenstruktur ab. Es ist aber auch denkbar, dass das Heizelement auf die zum Innern des Schienenfahrzeugs weisende Seite der Rahmenstruktur der Kernlage aufgesetzt wird. Der Türaufbau wird dann zum Innern des Schienenfahrzeugs hin von besagter Deckschicht abgeschlossen.

Entsprechend kann das Heizelement in vergleichbarer Weise auch alternativ oder zusätzlich auf der vom Schienenfahrzeug und/oder vom Vorraum oder Fahrgastraum wegweisenden Seite angeordnet sein.

Dabei ist hervorzuheben, dass der Türflügel, wenn er Teil einer Außentür ist, eine zum Innern des Schienenfahrzeugs weisende und eine vom Schienenfahrzeug wegweisenden Seite hat. Handelt es sich bei dem Türflügel um einen Teil einer Tür im Innern des Schienenfahrzeugs, beispielsweise zwischen dem Fahrgastraum und dem Einstiegsbereich, so hat der Türflügel eine zum Fahrgastraum weisende und eine vom Fahrgastraum wegweisende Seite.

Gemäß noch einer anderen Ausgestaltung des erfindungsgemäßen Schienenfahrzeugs weist das Heizelement mehrere Teilelemente auf, die vorzugsweise voneinander getrennt sind. Die Verwendung mehrerer Teilelemente hat den Vorteil, dass diese optimal an die Rahmenkonstruktion der Kernlage derart angepasst werden können, dass diese zwischen die einzelnen Rahmenteile eingefügt werden können. Dabei haben die Teilelemente vorzugsweise dieselbe Konstruktion, sind also beispielsweise sämtlich als Flächenheizelement ausgeführt. Es ist aber auch denkbar, dass das Heizelement von unterschiedlich ausgebildeten Teilelementen gebildet wird, beispielsweise von einem oder mehreren Flächenheizelementen, die insbesondere im Bereich des Kernmaterials angeordnet werden, und von einem Heizdraht, der insbesondere in oder an einer Fensterscheibe vorgesehen ist, die in das Bauteil, insbesondere den Türflügel, integriert ist.

Gemäß noch einer anderen Ausgestaltung ist das Heizelement oder mindestens eines der Teilelemente, vorzugsweise alle Teilelemente, mit der Steuerung verbunden. Mittels einer solchen Steuerung kann das jeweilige Element individuell angesteuert und geregelt werden und die Temperatur beispielsweise an sich ändernde Außen- und/oder Innentemperaturen angepasst werden. Dabei ist es denkbar, am Türflügel mindestens einen Temperatursensor, und zwar insbesondere an dem Heizelement und/oder an einer der Deckschichten, anzuordnen. Dieser Temperatursensor kann dazu verwendet werden, die aktuelle Oberflächentemperatur zu ermitteln und an die Steuerung zu übertragen, wo der aktuell ermittelte Temperaturwert dann mit einem Referenzwert verglichen werden kann, um auf Basis des Vergleichsergebnisses die Wärmeabgabe des Heizelements gegebenenfalls nachzuregeln. Vorteilhafterweise befindet sich ein weiterer Temperatursensor im Innern des Schienenfahrzeugs, beispielsweise im Innern des Fahrgastraums und/oder im Innern des Einstiegsbereichs, der ebenfalls mit der Steuerung verbunden sein kann, um auch den aktuellen Temperaturwert im Rauminnern für die Regelung der Wärmeabgabe des Heizelements heranziehen zu können.

Schließlich ist gemäß noch einer anderen Ausgestaltung des erfindungsgemäßen Schienenfahrzeugs eine Fensterscheibe im Bauteil, insbesondere Türflügel, vorgesehen, die mit einem weiteren Heizelement versehen ist. Mit anderen Worten ist es im Sinne der vorliegenden Erfindung denkbar, das Bauteil, insbesondere den Türflügel, mit einem ersten Heizelement und die Fensterscheibe mit einem zweiten Heizelement zu versehen, die dann unabhängig voneinander angesteuert und geregelt werden können. Wie vorangehend beschrieben, kann aber auch nur ein Heizelement vorgesehen sein, das in ein Teilelement für die Wand bzw. die Tür und ein weiteren Teilelement für die Fensterscheibe aufgeteilt ist, die gemeinsam angesteuert und geregelt werden können. Dabei weist das Heizelement oder Teilelement des Fensters insbesondere mindestens einen Heizdraht auf, der in oder an der Fensterscheibe angeordnet ist. Dadurch ist es möglich, den vollständigen Wandaufbau bzw. Türflügel gleichmäßig zu beheizen.

Bestandteil des erfindungsgemäßen Schienenfahrzeugs ist vorzugsweise, wie bereits zuvor angedeutet, eine Steuerung, mit der das Heizelement oder mindestens eines der Teilelemente, insbesondere alle Teilelemente, verbunden ist.

Dabei ist die Steuerung gemäß einer Ausgestaltung des erfindungsgemäßen Schienenfahrzeugs derart ausgebildet, dass die Temperatur des Heizelements oder des mindestens einen der Teilelemente einstellbar ist. Auch kann vorgesehen sein, dass die Steuerung derart ausgebildet ist, dass die Temperaturdifferenz zwischen der vom am Bauteil, insbesondere am Türflügel, vorgesehenen Sensor ermittelten Oberflächentemperatur des Bauteils bzw. Türflügels und der von einem im Innern des Schienenfahrzeugs vorgesehenen Sensor ermittelten Raumtemperatur einstellbar ist. Auf diese Weise kann eine Abweichung zwischen der Temperatur, die vom Wand- bzw. Türsensor ermittelt wird, und einem vorgegebenen Sollwert und/oder der Temperatur, die von dem Sensor im Fahrzeuginnern ermittelt wird, bestimmt werden, wobei auf Basis dieser Temperaturabweichung die Wärmeabgabe des Heizelements bzw. des jeweiligen Teilelements geregelt werden kann.

Das zuvor beschriebene Verfahren und Schienenfahrzeug ist besonders vorteilhaft, wenn es sich bei dem Schienenfahrzeug um eines aus dem Regionalverkehr handelt, bei dem die Türen naturgemäß dicht am sitzenden Fahrgast sind. Hierbei und auch bei anderen Schienenfahrzeugen ermöglichen die warmen Wand- bzw. Türflächen eine Absenkung der Raumtemperatur bei gleichbleibendem Komfort, womit eine entsprechende Energieeinsparung einhergeht. Im Übrigen können auf diese Weise beliebige Störstellen in der Wandisolierung ausgeglichen werden.

Es gibt nun eine Vielzahl von Ausgestaltungen und Weiterbildungen des erfindungsgemäßen Verfahrens und Schienenfahrzeugs. Hierzu wird einerseits verwiesen auf die dem Patentanspruch 1 nachgeordneten Patentansprüche, andererseits auf die Beschreibung eines Ausführungsbeispiels in Verbindung mit der Zeichnung. In der Zeichnung zeigen:
- Fig. 1a) und b): eine Prinzipdarstellung eines Türflügels gemäß einem ersten Ausführungsbeispiel der vorliegenden Erfindung und
- Fig. 2: eine Prinzipdarstellung eines Schienenfahrzeugs mit zwei Türflügeln gemäß der vorliegenden Erfindung.

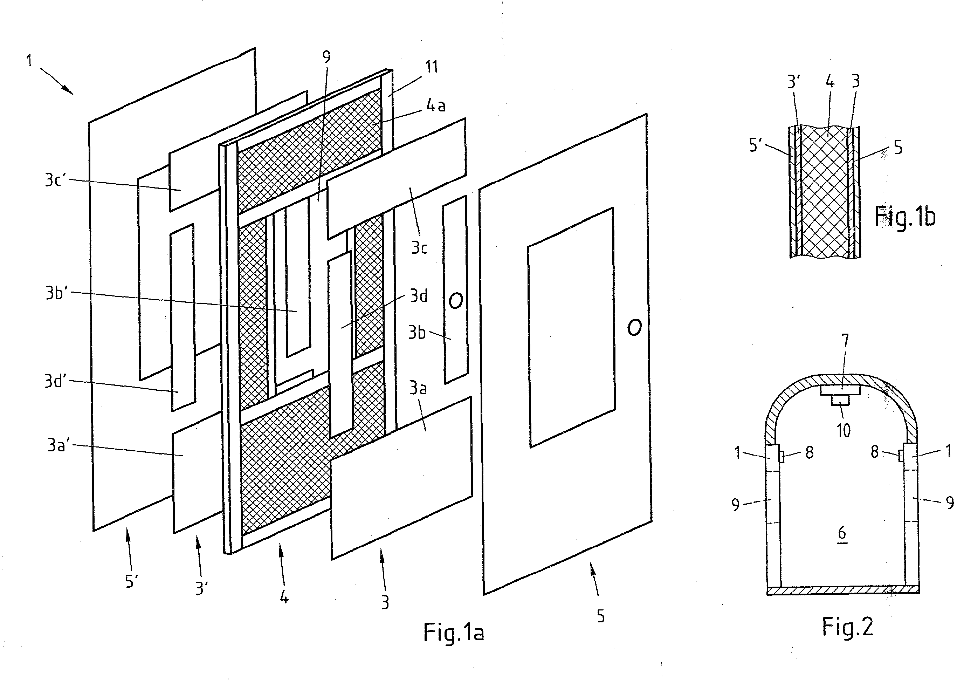

In Fig. 1a) ist eine Prinzipdarstellung eines flächenbeheizten Türflügels 1 als Teil einer Einrichtung zur Durchführung des erfindungsgemäßen Verfahrens in einer Explosionsansicht gezeigt. Fig. 1b) zeigt den Aufbau desselben Türflügels 1 im Schnitt.

Bei dem dargestellten Türflügel 1 handelt es sich um eine Außentür eines Schienenfahrzeugs, die das Innere des Schienenfahrzeugs von der äußeren Umgebung trennt.

Um die Oberflächentemperatur des Türflügels 1 individuell regeln zu können, weist der Türflügel 1 zwei integrierte Heizelemente 3 und 3' auf, die im vorliegenden Fall als Flächenheizelemente ausgebildet sind. Im einzelnen ist der Türflügel 1 wie folgt aufgebaut.

Der Türflügel 1 weist in der Mitte seines Aufbaus eine Kernlage 4 auf, die einen mehrteiligen Rahmen 11 und zwischen den einzelnen Rahmenteilen angeordnetes Kernmaterial 4a umfasst.

Auf beiden Seiten der Kernlage 4 ist jeweils ein aus mehreren Teilelementen 3a, 3b, 3c, 3d bzw. 3a', 3b', 3c', 3d' bestehendes Heizelement 3 bzw. 3' angeordnet, wobei die genannten Teilelemente 3a, 3b, 3c, 3d bzw. 3a', 3b', 3c', 3d' so geformt sind, dass sie der Form des Kernmaterials 4a entsprechen und benachbart zu diesem platziert werden können. Dabei ist die Stärke des Kernmaterials 4a geringer als die Stärke des Rahmens 11, so dass die einzelnen Teilelement 3a, 3b, 3c, 3d bzw. 3a', 3b', 3c', 3d' zusammen mit dem Kernmaterial 4a in den Rahmen 11 eingesetzt werden können. Im eingesetzten Zustand schließt die jeweilige Außenseite des Heizelements 3 bzw. 3' dadurch im vorliegenden Fall mit der Außenseite des Rahmens 11 ab. Mit anderen Worten bildet die Kernlage 4a zusammen mit den beiden Heizelemente 3 bzw. 3' ein Bauteil mit einer ebenen Oberfläche.

Auf diese ebene Oberfläche sind dann beidseitig Deckschichten 5 und 5' aufgebracht, die den Türflügelaufbau nach außen hin abschließen.

Der dargestellte Türflügel 1 weist somit auf der zum Innern des Schienenfahrzeugs 2 weisenden Seite und auf der vom Schienenfahrzeug wegweisenden Seite jeweils ein Heizelement 3 bzw. 3' auf, welches eine individuelle Regelung der Oberflächentemperatur des Türflügels 1 ermöglicht.

Wie Fig. 1a) zu entnehmen ist, weist der dargestellte Türflügel 1 ferner eine Fensterscheibe 9 auf, um die die einzelnen Teilelemente 3a, 3b, 3c, 3d bzw. 3a', 3b', 3c', 3d' herum platziert sind. Die Fensterscheibe 9 ist im vorliegenden Fall nicht mit einem weiteren Heizelement versehen, obwohl dies ebenfalls denkbar wäre. Ein solches zusätzliches Heizelement in oder an der Fensterscheibe 9 könnte beispielsweise durch mindestens einen Heizdraht realisiert werden.

Fig. 2 zeigt eine Prinzipdarstellung eines Wagenkastens eines Schienenfahrzeugs 2 als Schnittansicht.

Dabei ist zu beiden Seiten des Schienenfahrzeugs 2 jeweils ein Türflügel 1 vorgesehen, wie er zuvor anhand der Figuren 1a) und b) beschrieben wurde.

Im dargestellten Ausführungsbeispiel trennt der jeweilige Türflügel 1, der ggf. mit einer Fensterscheibe 9 versehen ist, den Fahrgastraum 6 von der äußeren Umgebung des Schienenfahrzeugs 2.

Jeder der beiden Türflügel 1 ist mit einem Temperatursensor 8 versehen, der in regelmäßigen Abständen oder kontinuierlich die Oberflächentemperatur an der Innenseite des Türflügels 1 ermittelt.

Im Deckenbereich des Fahrgastraums 6 ist ferner eine Steuerung 7 sowie ein weiterer Temperatursensor 10 zur Messung der Temperatur im Fahrgastraum 6 vorgesehen.

Die von den Sensoren 8 und 10 ermittelten Temperaturen werden an die Steuerung 7 übertragen, die eine Abweichung zwischen den beiden jeweils gemessenen Temperaturwerten ermittelt und auf Basis dessen die Wärmeabgabe der in die Türflügel 1 integrierten Heizelemente 3 bzw. 3' regelt. Auf diese Weise wird mit einfachen Mitteln erreicht, dass die Temperaturabweichung zwischen der mittleren Raumtemperatur und der Oberflächentemperatur des Türflügels immer auf ein Minimum, insbesondere von weniger als 15K, reduziert wird.

## Patentansprüche

1. Verfahren zum Beheizen eines Innenraums eines Schienenfahrzeugs,
- bei dem die Oberflächentemperatur auf der Innenseite eines einen Teil einer Außenwand des Wagenkastens des Schienenfahrzeugs bildenden Bauteils mit einem ersten Temperatursensor (8) ermittelt wird,
- bei dem der ermittelte Temperaturwert für die Oberflächentemperatur an eine Steuerung (7) übertragen wird,
- bei dem die Raumtemperatur des Innenraums mit einem zweiten Temperatursensor ermittelt wird, wobei der ermittelte Temperaturwert für die Raumtemperatur an die Steuerung (7) übertragen wird,
- bei dem der ermittelte Temperaturwert für die Raumtemperatur mit dem ermittelten Temperaturwert für die Oberflächentemperatur verglichen wird und
- bei dem auf Basis des Vergleichsergebnisses die Wärmeabgabe eines in das Bauteil integrierten Heizelements (3,3') geregelt wird, dergestalt, dass die Temperaturabweichung zwischen der Oberflächentemperatur des Bauteils und der mittleren Raumtemperatur auf ein vorgegebenes Minimum reduziert ist.

2. Verfahren nach Anspruch 1, **dadurch gekennzeichnet, dass** die maximale Abweichung der Oberflächentemperatur im Vergleich zur mittleren Raumtemperatur 15 K beträgt.

3. Verfahren nach Anspruch 1 oder 2, **dadurch gekennzeichnet, dass** das Bauteil ein Türflügel (1) einer Außentür oder ein Wandabschnitt ist, der insbesondere eine Fensterscheibe (9) aufweist, wobei die Oberflächentemperatur auf der Innenseite des Türflügels (1) oder Wandabschnitts von dem ersten Temperatursensor (8) ermittelt wird.

4. Schienenfahrzeug (2) mit einer Einrichtung zur Durchführung des Verfahrens nach einem der vorangehenden Ansprüche, wobei die Einrichtung umfasst:
- einen ersten Temperatursensor (8) zur Ermittlung der Oberflächentemperatur auf der Innenseite eines einen Teil einer Außenwand des Wagenkastens des Schienenfahrzeugs bildenden Bauteils,
- eine Steuerung (7), wobei der ermittelte Temperaturwert für die Oberflächentemperatur an die Steuerung (7) übertragen wird,
- einen zweiten Temperatursensor zur Ermittlung der Raumtemperatur des Innenraums, wobei der ermittelte Temperaturwert für die Raumtemperatur an die Steuerung (7) übertragen wird,
wobei die Steuerung (7) zum Vergleichen des ermittelten Temperaturwerts für die Raumtemperatur mit dem ermittelten Temperaturwert für die Oberflächentemperatur vorgesehen ist und
wobei die Steuerung (7) zum Regeln der Wärmeabgabe eines in das Bauteil integrierten Heizelements (3,3') auf Basis des Vergleichsergebnisses vorgesehen ist, dergestalt, dass die Temperaturabweichung zwischen der Oberflächentemperatur des Bauteils und der mittleren Raumtemperatur auf ein vorgegebenes Minimum reduziert ist.

5. Schienenfahrzeug (2) nach Anspruch 4, **dadurch gekennzeichnet, dass** die Steuerung (7) so eingerichtet ist, dass die maximale Abweichung der Oberflächentemperatur im Vergleich zur mittleren Raumtemperatur 15 K beträgt.

6. Schienenfahrzeug (2) nach Anspruch 4 oder 5, **dadurch gekennzeichnet, dass** der Innenraum ein Vorraum mit einem eine Außentür aufweisenden Einstiegsbereich oder ein Fahrgastraum ist, der eine Außenwand aufweist.

7. Schienenfahrzeug (2) nach einem der Ansprüche 4 bis 6, **dadurch gekennzeichnet, dass** das integrierte Heizelement (3,3') ein Flächenheizelement ist.

8. Schienenfahrzeug (2) nach einem der Ansprüche 4 bis 7, **dadurch gekennzeichnet, dass** das Heizelement (3,3') im Innern des Bauteils, insbesondere Türflügels (1), angeordnet ist, wobei das Heizelement (3,3') im Bauteil zwischen dem Kernmaterial (4a) einer innenliegenden Kernlage (4) und einer außenliegenden Deckschicht (5,5') angeordnet ist.

9. Schienenfahrzeug (2) nach Anspruch 8, **dadurch gekennzeichnet, dass** das Heizelement (3,3') auf der zum Innern des Schienenfahrzeugs (2) und/oder zum Vor- oder Fahrgastraum (6) des Schienenfahrzeugs (2) weisenden Seite des Kernmaterials (4a)
und/oder
auf der vom Schienenfahrzeug (2) und/oder vom Vor- oder Fahrgastraum (6) des Schienenfahrzeugs (2) wegweisenden Seite des Kernmaterials (4a) angeordnet ist.

10. Schienenfahrzeug (2) nach einem der Ansprüche 4 bis 9, **dadurch gekennzeichnet, dass** das Heizelement (3,3') mehrere Teilelemente (3a,3b,3c,3d;3a',3b`,3c',3d'), die vorzugsweise voneinander getrennt sind, aufweist.

11. Schienenfahrzeug (2) nach einem der Ansprüche 4 bis 10, **dadurch gekennzeichnet, dass** das Heizelement (3,3') oder mindestens eines der Teilelemente (3a,3b,3c,3d;3a',3b',3c',3d') mit der Steuerung (7) verbunden ist.

12. Schienenfahrzeug (2) nach Anspruch 11, **dadurch gekennzeichnet, dass** mindestens ein Temperatursensor (8) am Bauteil, insbesondere Türflügel (1), insbesondere an dem Heizelement (3,3') und/oder an einer der Deckschichten (5,5'), angeordnet ist.

13. Schienenfahrzeug (2) nach einem der Ansprüche 4 bis 12, **dadurch gekennzeichnet, dass** eine Fensterscheibe (9) im Bauteil, insbesondere Türflügel (1), vorgesehen ist, die mit einem weiteren Heizelement versehen ist.

14. Schienenfahrzeug (2) nach Anspruch 13, **dadurch gekennzeichnet, dass** das weitere Heizelement mindestens einen Heizdraht aufweist, der in oder an der Fensterscheibe (9) angeordnet ist.

15. Schienenfahrzeug (2) nach einem der Ansprüche 4 bis 14, **dadurch gekennzeichnet, dass** die Steuerung (7) derart ausgebildet ist, dass die Temperatur des Heizelements (3,3') oder des mindestens einen der Teilelemente (3a,3b,3c,3d;3a',3b',3c',3d') einstellbar ist.

## Claims

1. A method for heating an interior of a rail vehicle,
- in which the surface temperature is determined on the inner side of a component that forms part of an exterior wall of the rail vehicle superstructure with a first temperature sensor (8),
- in which the determined temperature value for the surface temperature is transmitted to a control (7),
- in which the room temperature of the interior is determined with a second temperature sensor, wherein the determined temperature value for the room temperature is transmitted to the control (7),
- in which the determined temperature value for the room temperature is compared with the determined temperature value for the surface temperature, and
- in which the heat output of a heating element (3, 3') integrated into the component is controlled based on the comparison result in such a way that the temperature deviation between the surface temperature of the component and the average room temperature is reduced to a predefined minimum.

2. The method according to Claim 1, **characterized in that** the maximum deviation of the surface temperature from the average room temperature amounts to 15 K.

3. The method according to Claim 1 or 2, **characterized in that** the component is a door leaf (1) of an exterior door or is a wall section that features, in particular, a window pane (9), wherein the surface temperature on the inner side of the door leaf (1) or wall section is determined by the first temperature sensor (8).

4. A rail vehicle (2) with a device for carrying out the method according to one of the preceding claims, wherein said device comprises:
- a first temperature sensor (8) for determining the surface temperature on the inner side of a component that forms part of an exterior wall of the rail vehicle superstructure,
- a control (7), wherein the determined temperature value for the surface temperature is transmitted to the control (7),
- a second temperature sensor for determining the room temperature of the interior, wherein the determined temperature value for the room temperature is transmitted to the control (7),
wherein the control (7) is designed for comparing the determined temperature value for the room temperature with the determined temperature value for the surface temperature, and
wherein the control (7) is designed for controlling the heat output of a heating element (3, 3') integrated into the component based on the comparison result in such a way that the temperature deviation between the surface temperature of the component and the average room temperature is reduced to a predefined minimum.

5. The rail vehicle (2) according to Claim 4, **characterized in that** the control (7) is realized such that the maximum deviation of the surface temperature from the average room temperature amounts to 15 K.

6. The rail vehicle (2) according to Claim 4 or 5, **characterized in that** the interior is a vestibule with an entrance area that features an exterior door or is a passenger compartment that features an exterior wall.

7. The rail vehicle (2) according to one of Claims 4 to 6, **characterized in that** the integrated heating element (3, 3') is a panel heating element.

8. The rail vehicle (2) according to one of Claims 4 to 7, **characterized in that** the heating element (3, 3') is arranged in the interior of the component, particularly the door leaf (1), wherein the heating element (3, 3') is arranged in the component between the core material (4a) of an inner core layer (4) and an outer cover layer (5, 5').

9. The rail vehicle (2) according to Claim 8, **characterized in that** the heating element (3, 3') is arranged on the side of the core material (4a) that is directed toward the interior of the rail vehicle (2) and/or toward the vestibule or passenger compartment (6) of the rail vehicle (2)
and/or
on the side of the core material (4a) that is directed away from the rail vehicle (2) and/or from the vestibule or passenger compartment (6) of the rail vehicle (2).

10. The rail vehicle (2) according to one of Claims 4 to 9, **characterized in that** the heating element (3, 3') features several subelements (3a, 3b, 3c, 3d; 3a', 3b', 3c', 3d') that are preferably separated from one another.

11. The rail vehicle (2) according to one of Claims 4 to 10, **characterized in that** the heating element (3, 3') or at least one of the subelements (3a, 3b, 3c, 3d; 3a', 3b', 3c', 3d') is connected to the control (7).

12. The rail vehicle (2) according to Claim 11, **characterized in that** at least one temperature sensor (8) is arranged on the component, particularly the door leaf (1), especially on the heating element (3, 3') and/or one of the cover layers (5, 5').

13. The rail vehicle (2) according to one of Claims 4 to 12, **characterized in that** a window pane (9) is arranged in the component, particularly the door leaf (1), and provided with an additional heating element.

14. The rail vehicle (2) according to Claim 13, **characterized in that** the additional heating element features at least one resistance wire that is arranged in or on the window pane (9).

15. The rail vehicle (2) according to one of Claims 4 to 14, **characterized in that** the control (7) is realized in such a way that the temperature of the heating element (3, 3') or at least one of the subelements (3a, 3b, 3c, 3d; 3a', 3b', 3c', 3d') is adjustable.

## Revendications

1. Procédé de chauffage d'un habitacle de véhicule ferroviaire,
- dans lequel la température de surface de la face intérieure d'une pièce formant une partie d'une paroi extérieure du caisson du wagon du véhicule ferroviaire est déterminée à l'aide d'un premier détecteur de température (8),
- dans lequel la valeur de température déterminée pour la température de surface est transmise à une commande (7),
- dans lequel la température ambiante de l'habitacle est déterminée à l'aide d'un second détecteur de température, la valeur de température déterminée pour la température ambiante étant transmise à la commande (7),
- dans lequel la valeur de température déterminée pour la température de surface est comparée à la valeur de température déterminée pour la température de surface et
- dans lequel, en se basant sur le résultat de la comparaison, l'émission thermique d'un élément chauffant (3, 3') intégré dans la pièce est réglée de manière à ce que l'écart de température entre la température de surface de la pièce et la température ambiante moyenne soit réduite à un minimum prédéfini.

2. Procédé selon la revendication 1, **caractérisé en ce que** l'écart maximal entre la température de surface et la température ambiante moyenne s'élève à 15 K.

3. Procédé selon la revendication 1 ou 2, **caractérisé en ce que** la pièce est un battant de porte (1) d'une paroi extérieure ou une section de paroi qui présente en particulier une vitre de fenêtre (9), la température de surface sur la face intérieure du battant de porte (1) ou de la section de paroi étant déterminée par le premier détecteur de température (8).

4. Véhicule ferroviaire (2) comportant un dispositif de réalisation du procédé selon une des revendications précédentes, ce dispositif comprenant :
- un premier détecteur de température (8) pour déterminer la température de surface sur la face intérieure d'une pièce formant une partie d'une paroi extérieure du caisson de wagon du véhicule ferroviaire,
- une commande (7), la valeur de température déterminée pour la température de surface étant transmise à la commande (7),
- un second détecteur de température pour déterminer la température ambiante de l'habitacle, la valeur de température déterminée pour la température ambiante étant transmise à la commande (7),
la commande (7) étant prévue pour comparer la valeur de température déterminée pour la température ambiante à la valeur de température déterminée pour la température de surface et
la commande (7) étant prévue pour régler l'émission thermique d'un élément chauffant (3, 3') intégré dans la pièce en se basant sur le résultat de la comparaison de manière à ce que l'écart de température entre la température de surface de la pièce et la température ambiante déterminée moyenne soit réduit à un minimum prédéfini.

5. Véhicule ferroviaire (2) selon la revendication 4, **caractérisé en ce que** la commande (7) est agencée de manière à ce que l'écart maximal entre la température de surface et la température ambiante moyenne s'élève à 15 K.

6. Véhicule ferroviaire (2) selon la revendication 4 ou 5, **caractérisé en ce que** l'habitacle est un sas ayant une zone d'accès présentant une porte extérieure ou un habitacle pour passagers présentant une paroi extérieure.

7. Véhicule ferroviaire (2) selon une des revendications 4 à 6, **caractérisé en ce que** l'élément chauffant intégré (3, 3') est un élément chauffant de surface.

8. Véhicule ferroviaire (2) selon une des revendications 4 à 7, **caractérisé en ce que** l'élément chauffant (3, 3') est disposé à l'intérieur de la pièce, en particulier du battant de porte (1), l'élément chauffant (3, 3') étant disposé dans la pièce entre le matériau central (4a) d'une couche centrale intérieure (4) et une couche de recouvrement extérieure (5, 5').

9. Véhicule ferroviaire (2) selon la revendication 8, **caractérisé en ce que** l'élément chauffant (3, 3') est disposé sur la face du matériau central (4a) tournée vers l'intérieur du véhicule ferroviaire (2) et/ou vers le sas ou l'habitacle pour passagers (6) du véhicule ferroviaire (2)
et/ou
sur la face du matériau central (4a) détournée du véhicule ferroviaire (2) et/ou du sas ou de l'habitacle pour passagers (6) du véhicule ferroviaire (2).

10. Véhicule ferroviaire (2) selon une des revendications 4 à 9, **caractérisé en ce que** l'élément chauffant (3, 3') présente plusieurs sous-éléments (3a, 3b, 3c, 3d ; 3a', 3b', 3c', 3d') qui sont de préférence séparés les uns des autres.

11. Véhicule ferroviaire (2) selon une des revendications 4 à 10, **caractérisé en ce que** l'élément chauffant (3, 3') ou au moins un des sous-éléments (3a, 3b, 3c, 3d ; 3a', 3b', 3c', 3d') est raccordé à la commande (7).

12. Véhicule ferroviaire (2) selon la revendication 11, **caractérisé en ce qu'**au moins un détecteur de température (8) est disposé sur la pièce, en particulier le battant de porte (1), en particulier sur l'élément chauffant (3, 3') et/ou sur une des couches de recouvrement (5, 5').

13. Véhicule ferroviaire (2) selon une des revendications 4 à 12, **caractérisé en ce qu'**une vitre de fenêtre (9) qui est pourvue d'un autre élément chauffant est prévue dans la pièce, en particulier le battant de porte (1).

14. Véhicule ferroviaire (2) selon la revendication 13, **caractérisé en ce que** l'autre élément chauffant présente au moins un fil chauffant qui est disposé dans ou sur la vitre de fenêtre (9).

15. Véhicule ferroviaire (2) selon une des revendications 4 à 14, **caractérisé en ce que** la commande (7) est réalisée de manière à ce que la température de l'élément chauffant (3, 3') ou de l'au moins un des sous-éléments (3a, 3b, 3c, 3d ; 3a', 3b', 3c', 3d') soit réglable.
